# EUROPEAN PATENT APPLICATION

(11) **EP 4 439 838 A1**
(43) Date of publication of application: **02.10.2024**
(21) Application number: 22900066.6
(22) Date of filing: 26.09.2022
(51) Int. Cl.: H01M 50/30

(54) **BATTERY CELL, BATTERY, AND ELECTRIC DEVICE**

(30) Priority: 30.11.2021 CN 202123032120 U
(71) Applicant: Contemporary Amperex Technology (Hong Kong) Limited, Central, Central And Western District (HK)
(72) Inventor: CHEN, Xinxiang, Ningde, Fujian 352100 (CN); ZHENG, Yulian, Ningde, Fujian 352100 (CN); HUANG, Shoujun, Ningde, Fujian 352100 (CN); LIU, Yanyu, Ningde, Fujian 352100 (CN); WANG, Peng, Ningde, Fujian 352100 (CN)
(74) Representative: Gong, Jinping
(86) International application number: PCT/CN2022/121450
(87) International publication number: WO 2023/098258

(57) **Abstract**

The present application discloses a battery cell, a battery, and a power consuming device. The battery cell according to an embodiment of the present application includes a housing, an electrode assembly, and a pressure relief mechanism. The electrode assembly is accommodated inside the housing. The pressure relief mechanism is arranged in the housing. The pressure relief mechanism includes a weakened portion, a body portion, and a connecting portion. The weakened portion is configured to be damaged to release a pressure inside the housing when the pressure reaches a threshold. The body portion is located in a region enclosed by the weakened portion, and the connecting portion is located on an outer side of the weakened portion and is configured to be welded to the housing. The body portion is provided with a first groove, and the first groove is configured to release a stress when the connecting portion is welded to the housing. According to the embodiment of the present application, the body portion is provided with the first groove, to disperse and release the stress on the body portion, reduce the risk of premature breakage of the weakened portion, improve safety of the battery cell, and prolong the service life of the battery cell.

## Description

### Cross-Reference to Related Application

The present application claims priority to Chinese Patent Application No. 202123032120.4, entitled "BATTERY CELL, BATTERY, AND POWER CONSUMING DEVICE" and filed on November 30, 2021, which is incorporated herein by reference in its entirety.

### Technical Field

The present application relates to the field of batteries, and in particular, to a battery cell, a battery, and a power consuming device.

### Background Art

Battery cells are widely used in electronic devices, such as a mobile phone, a notebook computer, an electromobile, an electric vehicle, an electric airplane, an electric ship, an electric toy car, an electric toy ship, an electric toy airplane, and an electric tool. The battery cells may include a nickel-cadmium battery cell, a nickel-hydrogen battery cell, a lithium-ion battery cell, a secondary alkaline zinc-manganese battery cell, etc.

In the development of the battery technology, in addition to improving the performance of battery cells, the safety is also a non-negligible issue. If the safety of battery cells cannot be guaranteed, the battery cells cannot be used. Therefore, how to enhance the safety of battery cells is an urgent technical problem to be solved in the battery technology.

### Summary of the Invention

The present application provides a battery cell, a battery, and a power consuming device, which can enhance safety.

In a first aspect, the present application provides a battery cell, including a housing, an electrode assembly, and a pressure relief mechanism. The electrode assembly is accommodated inside the housing. The pressure relief mechanism is arranged in the housing. The pressure relief mechanism includes a weakened portion, a body portion, and a connecting portion. The weakened portion is configured to be damaged to release a pressure inside the housing when the pressure reaches a threshold. The body portion is located in a region enclosed by the weakened portion, and the connecting portion is located on an outer side of the weakened portion and is configured to be welded to the housing. The body portion is provided with a first groove, and the first groove is configured to release a stress when the connecting portion is welded to the housing.

When the connecting portion is welded to the housing, the welding stress is transferred to the body portion. In the above solution, the body portion is provided with the first groove, to disperse and release the stress on the body portion, reduce stress concentration on the body portion and deformation of the body portion, ensure flatness of the body portion, reduce the risk of premature breakage of the weakened portion, improve safety of the battery cell, and prolong the service life of the battery cell.

In some implementations, the body portion includes a base corresponding to a bottom surface of the first groove, and the base has a thickness greater than that of the weakened portion.

In the above solution, the base has a strength greater than that of the weakened portion, so as to prevent the pressure relief mechanism from being broken at the base when an internal pressure of the battery cell reaches the threshold, and ensure that the pressure relief mechanism is broken at a set position.

In some implementations, the pressure relief mechanism is provided with a second groove, and a part of the pressure relief mechanism corresponding to a bottom surface of the second groove forms the weakened portion.

In the above solution, the pressure relief mechanism is provided with the second groove, to reduce the thickness and strength of the weakened portion, so that the weakened portion may be damaged when the internal pressure reaches the threshold.

In some implementations, the second groove is recessed from a surface of the body portion facing the electrode assembly in a direction away from the electrode assembly; or the second groove is recessed from a surface of the body portion away from the electrode assembly in a direction facing the electrode assembly. The second groove has a depth greater than that of the first groove.

In the above solution, the depth of the second groove is greater than the depth of the first groove, such that the thickness of the base is greater than the thickness of the weakened portion.

In some implementations, the first groove and the second groove are arranged on the same side of the pressure relief structure, and the first groove has an end extending to an edge of the body portion and is in communication with the second groove.

In the above solution, the first groove is in communication with the second groove, which can improve a stress dispersion effect, and make the stress distribution of the body portion more uniform, thereby reducing deformation of the body portion.

In some implementations, the end of the first groove extends to an edge of the body portion configured to connect to the weakened portion. In the above solution, the stress distribution on the body portion may be more uniform, thereby reducing deformation of the body portion.

In some implementations, the surface of the body portion that faces the electrode assembly is provided with the first groove; and/or the surface of the body portion away from the electrode assembly is provided with the first groove.

In some implementations, the thickness of the connecting portion is greater than the thickness of the body portion.

The connecting portion needs to be welded to the housing. In the above solution, the connecting portion has a relatively large thickness, so as to increase a connection strength between the housing and the connecting portion and reduce the risk of breakage of the connecting portion under the action of the welding stress.

In some implementations, the pressure relief mechanism includes a first surface and a second surface that are oppositely arranged, the first surface is located on a side of the pressure relief mechanism away from the electrode assembly, and the second surface is located on a side of the pressure relief mechanism facing the electrode assembly. The pressure relief mechanism is provided with a recess recessed from the first surface in a direction facing the electrode assembly, and a part between a bottom surface of the recess and the second surface includes the body portion and the weakened portion. The connecting portion is located between the first surface and the second surface and surrounds an outer side of the recess.

In the above solution, the recess is provided, to increase a distance between the weakened portion and the first surface, reduce the risk of damage to the weakened portion caused by an external member, and improve safety and service life of the battery cell.

In some implementations, the first groove includes a first groove section and a second groove section that are in communication with each other; and at a junction of the first groove section and the second groove section, a groove wall surface of the first groove section close to the second groove section is in transition with a groove wall surface of the second groove section by means of an arc surface.

In the above solution, the groove wall surface of the first groove section is in transition with the groove wall surface of the second groove section by means of the arc surface. This can prevent formation of a sharp corner at a joint of the groove wall surface of the first groove section and the groove wall surface of the second groove section, reduce stress concentration of the body portion, and reduce the risk of breakage of the body portion.

In some implementations, the first groove section and the second groove section are both arc-shaped, and a middle portion of the first groove section is in communication with a middle portion of the second groove section. In the above solution, the body portion may be divided into at least four regions, which can better disperse the stress, and reduce the deformation of the body portion.

In some implementations, two first groove sections are provided, and the two first groove sections are respectively in communication with two ends of the second groove section.

In some implementations, the housing includes a shell and an end cap, the shell is provided with an opening, and the end cap is configured to cover the opening of the shell. The pressure relief mechanism is mounted on the end cap.

Compared with the shell, the end cap has a larger thickness and is not likely to deform under the action of the internal pressure. In the above solution, the pressure relief mechanism is mounted on the end cap, which can reduce the deformation of the pressure relief mechanism under the action of the internal pressure and reduce the risk of premature breakage of the pressure relief mechanism.

In a second aspect, the present application provides a battery, which includes a plurality of battery cells according to any one of the embodiments of the first aspect.

In a third aspect, the present application provides a power consuming device, which includes a battery cell according to any one of the embodiments of the first aspect. The battery cell is configured to provide electric energy.

### Brief Description of the Drawings

Features, advantages, and technical effects of exemplary embodiments of the present application are described below with reference to accompanying drawings.
FIG. 1 is a schematic structural diagram of a vehicle according to some embodiments of the present application;
FIG. 2 is a schematic exploded view of a battery according to some embodiments of the present application;
FIG. 3 is a schematic structural diagram of a battery module shown in FIG. 2;
FIG. 4 is a schematic exploded view of a battery cell according to some embodiments of the present application;
FIG. 5 is a schematic structural diagram of a pressure relief mechanism of a battery cell according to some embodiments of the present application;
FIG. 6 is a schematic top view of the pressure relief mechanism shown in FIG. 5;
FIG. 7 is a schematic sectional view of the pressure relief mechanism shown in FIG. 6 taken along line A-A;
FIG. 8 is a schematic enlarged view of the pressure relief mechanism shown in FIG. 7 at circle C;
FIG. 9 is a schematic enlarged view of the pressure relief mechanism shown in FIG. 7 at circle D;
FIG. 10 is a schematic enlarged view of the pressure relief mechanism shown in FIG. 6 at circle B; and
FIG. 11 is a schematic top view of a pressure relief mechanism of a battery cell according to some other embodiments of the present application.

In the accompanying drawings, the figures are not necessarily drawn to scale.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without involving any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include/comprise" and "has/have" and any variations thereof in the description and the claims of the present application as well as the brief description of the drawings described above are intended to cover non-exclusive inclusion. The terms "first", "second", etc. in the specification and the claims of the present application and in the foregoing accompanying drawings are used to distinguish between different objects, rather than describe a specific order or a primary-secondary relationship.

The phrase "embodiment" mentioned in the present application means that the specific features, structures and characteristics described with reference to the embodiment may be encompassed in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

The phrase "a plurality of" appearing in the present application means two or more (including two).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, etc., which is not limited in the embodiments of the present application. The battery cell may be cylindrical, flat, cuboid or in another shape, which is not limited in the embodiments of the present application.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell(s).

The battery cell includes an electrode assembly and an electrolyte. The electrode assembly includes a positive electrode plate, a negative electrode plate, and a separator. The battery cell operates mainly by relying on movements of metal ions between the positive electrode plate and the negative electrode plate. The positive electrode plate includes a positive current collector and a positive active material layer. A surface of the positive current collector is coated with the positive active material layer. The positive current collector includes a positive coated region and a positive tab connected to the positive coated region, the positive coated region is coated with the positive active material layer, and the positive tab is not coated with the positive active material layer. Taking a lithium-ion battery cell as an example, the positive current collector may be made of aluminum, and the positive active material layer includes a positive active material which may be lithium cobalt oxides, lithium iron phosphate, ternary lithium, lithium manganate, etc. The negative electrode plate includes a negative current collector and a negative active material layer. A surface of the negative current collector is coated with the negative active material layer. The negative current collector includes a negative coated region and a negative tab connected to the negative coated region, the negative coated region is coated with the negative active material layer, and the negative tab is not coated with the negative active material layer. The negative current collector may be made of copper, and the negative active material layer includes a negative active material which may be carbon, silicon, etc. The separator may be made of polypropylene (PP), polyethylene (PE), etc.

Design factors on many aspects need to be simultaneously considered for the development of the battery technology, such as energy density, cycling life, discharge capacity, charge-discharge rate, and other performance parameters. In addition, the safety of the battery needs to be considered.

A pressure relief mechanism on the battery cell has an important effect on the safety of the battery cell. For example, when a phenomenon such as a short circuit or overcharge occurs, the battery cell may be internally subjected to thermal runaway and the pressure may suddenly rise. In this case, the internal pressure can be relieved to outside by actuating the pressure relief mechanism to prevent the battery cell from exploding and catching fire.

The pressure relief mechanism refers to an element or component that is actuated, when an internal pressure of the battery cell reaches a predetermined threshold, to relieve the internal pressure. The threshold design varies according to different design requirements. The threshold may depend on materials of one or more of the positive electrode plate, the negative electrode plate, the electrolyte, and the separator in the battery cell. The internal pressure of the battery cell is an internal pressure of a housing.

The pressure relief mechanism may be in the form of an explosion-proof valve, a gas valve, a pressure relief valve, a safety valve, etc., and may specifically use a pressure-sensitive element or structure. That is, when the internal pressure of the battery cell reaches the predetermined threshold, the pressure relief mechanism performs an action or a weakened portion provided in the pressure relief mechanism is broken, thereby forming an opening or a channel for relief of the internal pressure.

The "actuated" mentioned in the present application means that the pressure relief mechanism acts or is activated into a certain state, such that the internal pressure of the battery cell is relieved. Actions produced by the pressure relief mechanism may include, but are not limited to, at least a portion of the pressure relief mechanism being broken, cracked, torn or opened, etc. When the pressure relief mechanism is actuated, high-temperature and high-pressure substances inside the battery cell are discharged outward from an actuated part as emissions. In this way, the pressure of the battery cell can be relieved at a controllable pressure, thereby preventing the occurrence of potentially more serious accidents.

The emissions from the battery cell mentioned in the present application include, but are not limited to, an electrolyte, dissolved or split positive and negative electrode plates, fragments of a separator, a high-temperature and high-pressure gas generated by a reaction, flames, etc.

The inventors have found that during cycling of the battery cell, the pressure relief mechanism may be actuated in advance when the internal pressure of the battery cell does not reach the threshold. In view of this problem, the inventors have analyzed and studied the structure and use environment of the battery cell. When the pressure relief mechanism is welded to the housing of the battery cell, a stress generated by welding is transferred to the pressure relief mechanism, resulting in abnormal deformation of the pressure relief mechanism and local stress concentration. In this way, under the action of the welding stress, the pressure relief mechanism may be actuated in advance when the internal pressure of the battery cell does not reach the threshold, resulting in electrolyte leakage, safety risks, and a premature failure of the battery cell.

In view of this, an embodiment of the present application provides a technical solution. In this technical solution, a battery cell includes a housing, an electrode assembly, and a pressure relief mechanism. The electrode assembly is accommodated inside the housing. The pressure relief mechanism is arranged in the housing. The pressure relief mechanism includes a weakened portion, a body portion, and a connecting portion. The weakened portion is configured to be damaged to release a pressure inside the housing when the pressure reaches a threshold. The body portion is located in a region enclosed by the weakened portion, and the connecting portion is located on an outer side of the weakened portion and is configured to be welded to the housing. The body portion is provided with a first groove, and the first groove is configured to release a stress when the connecting portion is welded to the housing. In this technical solution, the body portion of the pressure relief mechanism is provided with the first groove, which can release the stress during welding of the connecting portion to the housing, reduce stress concentration on the body portion, deformation of the body portion, and the risk of premature breakage of the weakened portion, improve safety of the battery cell, and prolong the service life of the battery cell.

The technical solutions described in the embodiments of the present application are applicable to a battery and a power consuming device using a battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The power consuming devices mentioned above are not specifically limited in the embodiments of the present application.

For ease of description, an example in which the power consuming device is a vehicle is taken for description in the following embodiments.

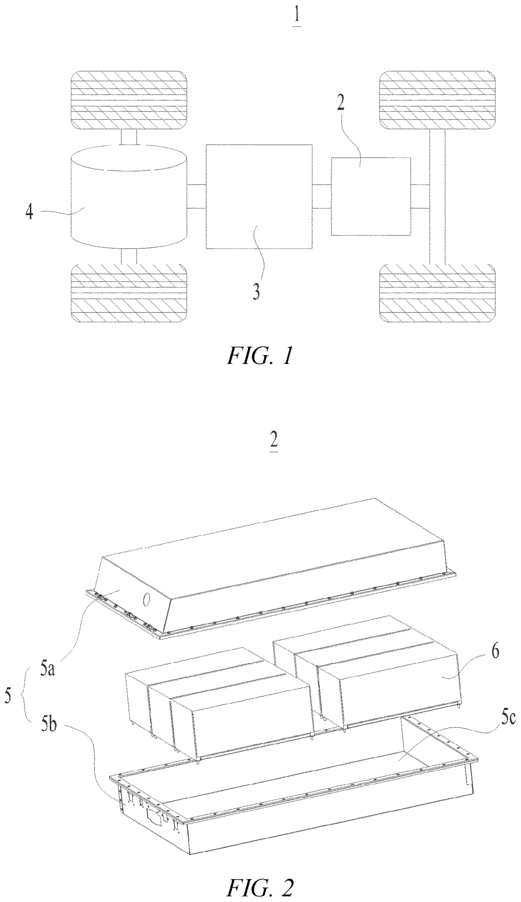

FIG. 1 is a schematic structural diagram of a vehicle according to some embodiments of the present application.

As shown in FIG. 1, a battery 2 is provided inside a vehicle 1, and the battery 2 may be arranged at a bottom, a head or a rear of the vehicle 1. The battery 2 may be configured to supply power to the vehicle 1. For example, the battery 2 may serve as a power source for operating the vehicle 1.

The vehicle 1 may further include a controller 3 and a motor 4. The controller 3 is configured to control the battery 2 to supply power to the motor 4, for example, to meet operating power requirements during starting, navigation and traveling of the vehicle 1.

In some embodiments of the present application, the battery 2 can not only serve as a power source for operating the vehicle 1, but also serve as a power source for driving the vehicle 1, in place of or partially in place of fuel or natural gas, to supply driving power to the vehicle 1.

FIG. 2 is a schematic exploded view of a battery according to some embodiments of the present application.

As shown in FIG. 2, the battery 2 includes a case 5 and a battery cell (not shown) accommodated in the case 5.

The case 5 is configured to accommodate the battery cell, and the case 5 may have various structures. In some embodiments, the case 5 may include a first case part 5a and a second case part 5b. The first case part 5a and the second case part 5b cover each other, and the first case part 5a and the second case part 5b jointly define an accommodation space 5c for accommodating the battery cell. The second case part 5b may be of a hollow structure with one end open, the first case part 5a is of a plate-like structure, and the first case part 5a covers the open side of the second case part 5b to form the case 5 having the accommodation space 5c. The first case part 5a and the second case part 5b each may also be of a hollow structure with one side open, and the open side of the first case part 5a covers the open side of the second case part 5b to form the case 5 having the accommodation space 5c. Of course, the first case part 5a and the second case part 5b may have various shapes such as a cylinder and a cuboid.

To improve the sealing performance after the first case part 5a and the second case part 5b are connected to each other, a seal, such as a sealant and a seal ring, may also be provided between the first case part 5a and the second case part 5b.

Assuming that the first case part 5a covers a top of the second case part 5b, the first case part 5a may also be referred to as an upper case cover, and the second case part 5b may also be referred to as a lower case.

In the battery 2, one or more battery cells may be provided. If a plurality of battery cells are provided, the plurality of battery cells may be in series connection or parallel connection or series-parallel connection. The series-parallel connection means that some of the plurality of battery cells are in series connection and some are in parallel connection. The plurality of battery cells may be directly in series connection or parallel connection or series-parallel connection, and then a unit composed of the plurality of battery cells is accommodated in the case 5. Of course, the plurality of battery cells may also be first in series connection or parallel connection or series-parallel connection to form a battery module 6, and a plurality of battery modules 6 are in series connection or parallel connection or series-parallel connection to form a unit and are accommodated in the case 5.

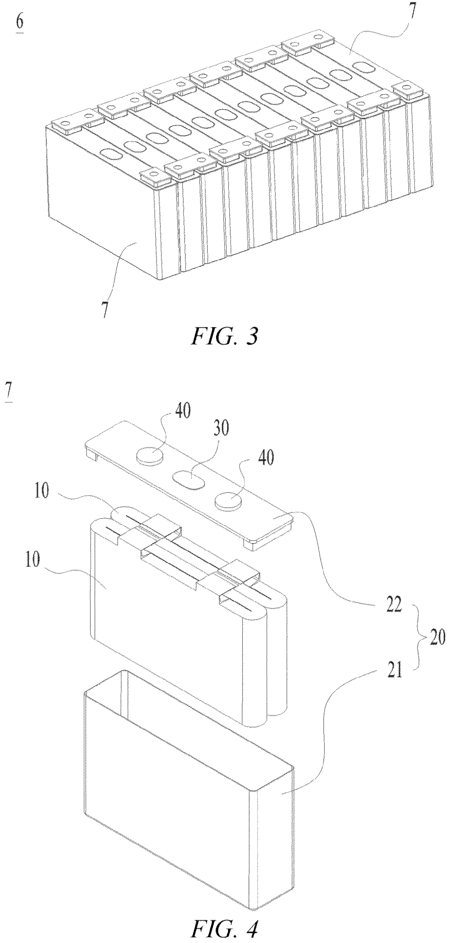

FIG. 3 is a schematic structural diagram of the battery module shown in FIG. 2.

In some embodiments, as shown in FIG. 3, a plurality of battery cells 7 are provided, and the plurality of battery cells 7 are first connected in series or in parallel or in series-parallel to form a battery module 6. A plurality of battery modules 6 are connected in series or in parallel or in series-parallel to form a unit and are accommodated in the case.

The plurality of battery cells 7 in the battery module 6 may be electrically connected to each other by means of a busbar component to implement series connection or parallel connection or series-parallel connection between the plurality of battery cells 7 in the battery module 6.

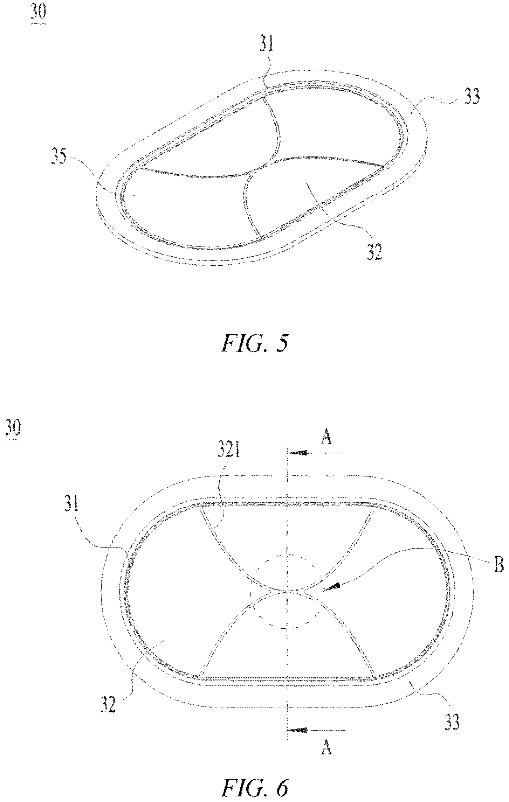

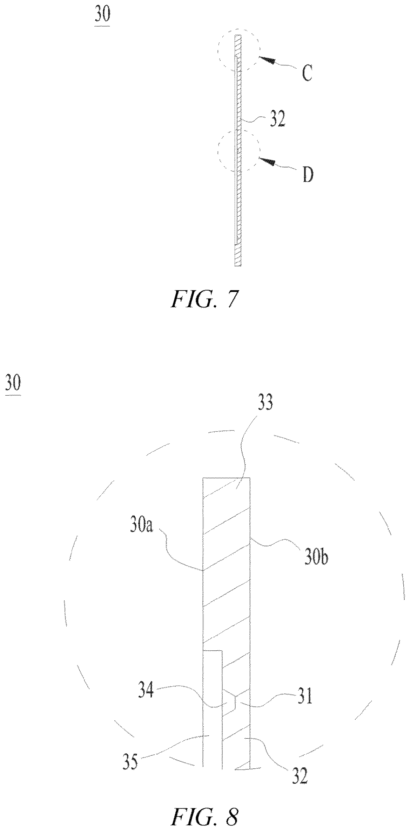

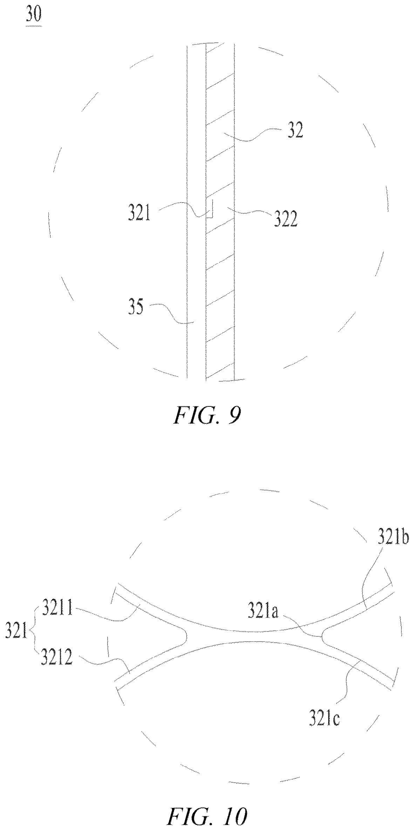

FIG. 4 is a schematic exploded view of a battery cell according to some embodiments of the present application; FIG. 5 is a schematic structural diagram of a pressure relief mechanism of a battery cell according to some embodiments of the present application; FIG. 6 is a schematic top view of the pressure relief mechanism shown in FIG. 5; FIG. 7 is a schematic sectional view of the pressure relief mechanism shown in FIG. 6 taken along line A-A; FIG. 8 is a schematic enlarged view of the pressure relief mechanism shown in FIG. 7 at circle C; and FIG. 9 is a schematic enlarged view of the pressure relief mechanism shown in FIG. 7 at circle D.

As shown in FIGS. 4 to 9, the battery cell 7 according to an embodiment of the present application includes an electrode assembly 10, a housing 20, and a pressure relief mechanism 30. The electrode assembly 10 is accommodated inside the housing 20. The pressure relief mechanism 30 is arranged in the housing 20. The pressure relief mechanism 30 includes a weakened portion 31, a body portion 32, and a connecting portion 33. The weakened portion 31 is configured to be damaged to release a pressure inside the housing 20 when the pressure reaches a threshold. The body portion 32 is located in a region enclosed by the weakened portion 31, and the connecting portion 33 is located on an outer side of the weakened portion 31 and is configured to be welded to the housing 20. The body portion 32 is provided with a first groove 321, and the first groove 321 is configured to release a stress when the connecting portion 33 is welded to the housing 20.

The electrode assembly 10 is a core component of the battery cell 7 to achieve charging and discharging functions, and includes a positive electrode plate, a negative electrode plate, and a separator. Polarities of the positive electrode plate and the negative electrode plate are opposite, and the separator is configured to insulate and isolate the positive electrode plate from the negative electrode plate. The electrode assembly 10 operates mainly by relying on movements of metal ions between the positive electrode plate and the negative electrode plate.

One or more electrode assemblies 10 may be provided. When a plurality of electrode assemblies 10 are provided, the plurality of electrode assemblies 10 may be arranged in a stacked manner. For example, as shown in FIG. 4, two electrode assemblies 10 are provided.

The housing 20 is of a hollow structure, and an accommodation cavity for accommodating the electrode assembly 10 and the electrolyte is formed inside the housing. The housing 20 may be in various shapes, such as cylindrical or cuboid. The housing 20 may be shaped depending on a specific shape of the electrode assembly 10. For example, if the electrode assembly 10 is of a cylindrical structure, a cylindrical housing may be used; or if the electrode assembly 10 is of a cuboid structure, a cuboid housing may be used.

The strength of the weakened portion 31 is less than the strength of the body portion 32 and the strength of the connecting portion 33, and the weakened portion is a part of the pressure relief mechanism 30 that is likely to be broken, crushed, torn or opened.

The weakened portion 31 is located at a joint of the body portion 32 and the connecting portion 33. In some examples, a predetermined region of the pressure relief mechanism 30 is thinned, and the thinned part of the pressure relief mechanism 30 forms the weakened portion 31, and two parts of the pressure relief mechanism 30 that are separated by the weakened portion 31 and are connected by the weakened portion 31 respectively form the body portion 32 and the connecting portion 33. In some other examples, a predetermined region of the pressure relief mechanism 30 is material-treated, so that the strength of this region is less than the strength of other regions. In other words, this region is the weakened portion 31, and two parts of the pressure relief mechanism 30 that are separated by the weakened portion 31 and are connected by the weakened portion 31 respectively form the body portion 32 and the connecting portion 33.

In some examples, the weakened portion 31 may surround the body portion 32 by one turn. In some other examples, the weakened portion 31 may also surround the body portion 32 by a certain angle. For example, the weakened portion 31 may surround the body portion by 180°-300°.

The first groove 321 may be provided on a side of the body portion 32facing the electrode assembly 10 or on a side of the body portion 32 away from the electrode assembly 10.

In this embodiment, the strength of the connecting portion 33 and the strength of the body portion 32 are not limited, provided that the strength of the connecting portion and the strength of the body portion are greater than the strength of the weakened portion 31. For example, the thickness of the connecting portion 33 may be greater than, equal to or less than the thickness of the body portion 32.

In this embodiment, the number of first grooves 321 is not limited, and one or more first grooves 321 may be provided.

When the connecting portion 33 is welded to the housing 20, the welding stress is transferred to the body portion 32. In this embodiment, the body portion 32 is provided with the first groove 321, to disperse and release the stress on the body portion 32, reduce stress concentration on the body portion 32 and deformation of the body portion 32, ensure flatness of the body portion 32, reduce the risk of premature breakage of the weakened portion 31, improve safety of the battery cell 7, and prolong the service life of the battery cell 7.

In some embodiments, the housing 20 includes a shell 21 and an end cap 22. The shell 21 is provided with an opening, and the end cap 22 covers the end cap 22 of the opening.

The pressure relief mechanism 30 may be mounted on the end cap 22 or the shell 21, which is not limited in this embodiment.

The shell 21 may be of a structure with one side provided with an opening, and the end cap 22 covers the opening of the shell 21. Alternatively, the shell 21 may be of a structure with two sides provided with openings, two end caps 22 are provided, and the two end caps 22 respectively cover the two openings of the shell 21.

For example, the end cap 22 is connected to the shell 21 by means of such as welding, bonding, or snap-fit connection.

In some embodiments, the shell 21 is of a structure with one side open and includes a bottom wall and at least one side wall connected to the bottom wall, and the side wall surrounds the bottom wall.

In some examples, the shell 21 is a cylindrical shell. Specifically, the shell 21 includes a cylindrical side wall with one end connected to the bottom wall, and the other end enclosing an opening opposite to the bottom wall.

In some other examples, the shell 21 is a cuboid shell. Specifically, the shell 21 includes four flat plate-like side walls, and the four side walls enclose an opening opposite to the bottom wall.

In some embodiments, the battery cell 7 further includes two electrode terminals 40. The two electrode terminals 40 may be arranged on the end cap 22. The two electrode terminals 40 are a positive electrode terminal and a negative electrode terminal. The positive electrode terminal is configured to be electrically connected to the positive electrode plate of the electrode assembly 10, and the negative electrode terminal is configured to be electrically connected to the negative electrode plate to lead electric energy generated by the electrode assembly 10 out of the housing 20.

In some embodiments, the housing 20 includes a shell 21 and an end cap 22. The shell 21 is provided with an opening, and the end cap 22 is configured to cover the opening of the shell 21. The pressure relief mechanism 30 is mounted on the end cap 22.

For example, the connecting portion 33 is connected to the end cap 22 by laser welding.

Compared with the shell 21, the end cap 22 has a larger thickness and is not likely to deform under the action of the internal pressure. In this embodiment, the pressure relief mechanism 30 is mounted on the end cap 22, which can reduce the deformation of the pressure relief mechanism 30 under the action of the internal pressure and reduce the risk of premature breakage of the pressure relief mechanism 30.

In some embodiments, the end cap 22 is provided with a pressure relief through hole which runs through the end cap 22, and the pressure relief mechanism 30 covers the pressure relief through hole. The pressure relief mechanism 30 may be mounted on a side of the end cap 22 facing the electrode assembly 10, or on a side of the end cap 22 away from the electrode assembly 10.

In some embodiments, the pressure relief mechanism 30 is of an integrally formed structure.

In some embodiments, the first groove 321 is formed by squeezing the pressure relief mechanism 30. During forming of the first groove 321, a part of a material flows around the first groove 321 to increase a local strength of the body portion 32 and reduce the risk of deformation of the body portion 32.

In some embodiments, an end of the first groove 321 extends to an edge of the body portion 32 configured to connect to the weakened portion 31. In this embodiment, the stress distribution on the body portion 32 can be more uniform, thereby reducing deformation of the body portion 32.

In some embodiments, the body portion 32 includes a base 322 corresponding to a bottom surface of the first groove 321, and the thickness of the base 322 is greater than the thickness of the weakened portion 31.

In this embodiment, the thickness of the base 322 is greater than the thickness of the weakened portion 31, such that the strength of the base 322 is greater than the strength of the weakened portion 31, to prevent the pressure relief mechanism 30 from being broken at the base 322 when the internal pressure of the battery cell 7 reaches the threshold, and ensure that the pressure relief mechanism 30 is broken at a set position.

In some embodiments, the pressure relief mechanism 30 is provided with a second groove 34, and a part of the pressure relief mechanism 30 corresponding to a bottom surface of the second groove 34 forms the weakened portion 31.

In this embodiment, the pressure relief mechanism 30 is provided with the second groove 34, to reduce the thickness and strength of the weakened portion 31, so that the weakened portion 31 can be damaged when the internal pressure reaches the threshold.

In some embodiments, the second groove 34 is recessed from a surface of the body portion 32 facing the electrode assembly 10 in a direction away from the electrode assembly 10; or the second groove 34 is recessed from a surface of the body portion 32 away from the electrode assembly 10 in a direction facing the electrode assembly 10. The second groove 34 has a depth greater than that of the first groove 321.

In this embodiment, the first groove 321 and the second groove 34 may be provided on the same side of the pressure relief mechanism 30, or may be respectively arranged on two sides of the pressure relief mechanism 30.

In this embodiment, the second groove 34 has a depth greater than that of the first groove 321, such that the thickness of the base 322 is greater than the thickness of the weakened portion 31.

In some embodiments, the first groove 321 and the second groove 34 are provided on the same side of the pressure relief mechanism 30, and the first groove 321 has an end extending to an edge of the body portion 32 and is in communication with the second groove 34.

In this embodiment, the first groove 321 is in communication with the second groove 34, which can improve a stress dispersion effect, and make the stress distribution of the body portion 32 more uniform, thereby reducing deformation of the body portion 32.

In some embodiments, the first groove 321 is provided on the surface of the body portion 32 facing the electrode assembly 10; and/or the first groove 321 is provided on the surface of the body portion 32 away from the electrode assembly 10.

In this embodiment, the first groove 321 may be provided only on the surface of the body portion 32 facing the electrode assembly 10, or the first groove 321 may be provided only on the surface of the body portion 32 away from the electrode assembly 10, or the first groove 321 may be provided on each of two surfaces of the body portion 32.

In some embodiments, the connecting portion 33 has a thickness greater than that of the body portion 32.

The connecting portion 33 needs to be welded to the housing 20. In this embodiment, the connecting portion 33 has a relatively large thickness, so as to increase a connection strength between the housing 20 and the connecting portion 33 and reduce the risk of breakage of the connecting portion 33 under the action of the welding stress.

In some embodiments, the pressure relief mechanism 30 includes a first surface 30a and a second surface 30b that are oppositely arranged, the first surface 30a is located on a side of the pressure relief mechanism 30 away from the electrode assembly 10, and the second surface 30b is located on a side of the pressure relief mechanism 30 facing the electrode assembly 10. The pressure relief mechanism 30 is provided with a recess 35 recessed from the first surface 30a in a direction facing the electrode assembly 10, and a part between a bottom surface of the recess 35 and the second surface 30b includes the body portion 32 and the weakened portion 31. The connecting portion 33 is located between the first surface 30a and the second surface 30b and surrounds an outer side of the recess 35.

The weakened portion 31 may be directly connected to the connecting portion 33, or may be indirectly connected to the connecting portion 33 by means of other parts of the pressure relief mechanism 30.

In this embodiment, the recess 35 is provided, to increase a distance between the weakened portion 31 and the first surface 30a, reduce the risk of damage to the weakened portion 31 caused by an external member, and improve safety and service life of the battery cell 7.

In some embodiments, the first surface 30a and the second surface 30b are planar and are arranged in parallel.

FIG. 10 is a schematic enlarged view of the pressure relief mechanism shown in FIG. 6 at circle B.

As shown in FIG. 10, the first groove 321 includes a first groove section 3211 and a second groove section 3212 that are in communication with each other. At a junction of the first groove section 3211 and the second groove section 3212, a groove wall surface of the first groove section 3211 close to the second groove section 3212 is in transition with a groove wall surface of the second groove section 3212 by means of an arc surface 321a.

One or more first groove sections 3211 may be provided. The first groove section 3211 may be in an arc shape, a straight line shape or other shapes. One or more second groove sections 3212 may be provided. The second groove section 3212 may be in an arc shape, a straight line shape or other shapes.

The depth of the first groove section 3211 and the depth of the second groove section 3212 may be the same or different.

In this embodiment, the groove wall surface of the first groove section 3211 is in transition with the groove wall surface of the second groove section 3212 by means of the arc surface 321a. This can prevent formation of a sharp corner at a joint of the groove wall surface of the first groove section 3211 and the groove wall surface of the second groove section 3212, reduce stress concentration of the body portion 32, and reduce the risk of breakage of the body portion 32.

In some embodiments, the first groove section 3211 and the second groove section 3212 are both arc-shaped, and a middle portion of the first groove section 3211 is in communication with a middle portion of the second groove section 3212.

The groove wall surface of the first groove section 3211 close to the second groove section 3212 is divided into two first sub-wall surfaces 321b by the second groove section 3212, and a groove wall surface of the second groove section 3212 close to the first groove section 3211 is divided into two second sub-wall surfaces 321c by the first groove section 3211. The two first sub-wall surfaces 321b and the two second sub-wall surfaces 321c are respectively connected by corresponding arc surfaces 321a.

In this embodiment, the body portion 32 may be divided into at least four regions, which can better disperse the stress, and reduce the deformation of the body portion 32.

In some embodiments, the first groove 321 is generally X-shaped.

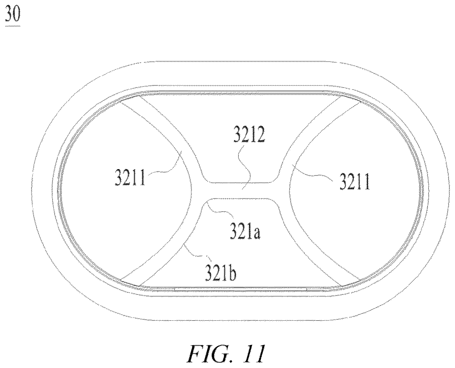

FIG. 11 is a schematic top view of a pressure relief mechanism of a battery cell according to some other embodiments of the present application.

As shown in FIG. 11, in some embodiments, two first groove sections 3211 are provided, and the two first groove sections 3211 are respectively in communication with two ends of the second groove section 3212.

In some embodiments, the second groove section 3212 is connected to the middle portion of the first groove section 3211. The groove wall surface of the first groove section 3211 close to the second groove section 3212 is divided into two first sub-wall surfaces 321b by the second groove section 3212, and the two first sub-wall surfaces 321b and the two groove wall surfaces of the second groove section 3212 are respectively connected by corresponding arc surfaces 321a.

In some embodiments, the first groove section 3211 is arc-shaped and the second groove section 3212 is in the shape of a straight line.

It should be noted that the embodiments in the present application and features in the embodiments may be combined with each other without conflicts.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A battery cell, comprising:
a housing;
an electrode assembly accommodated inside the housing; and
a pressure relief mechanism arranged in the housing, wherein the pressure relief mechanism comprises a weakened portion, a body portion, and a connecting portion, the weakened portion is configured to be damaged to release a pressure inside the housing when the pressure reaches a threshold, the body portion is located in a region enclosed by the weakened portion, and the connecting portion is located on an outer side of the weakened portion and is configured to be welded to the housing,
wherein the body portion is provided with a first groove, and the first groove is configured to release a stress when the connecting portion is welded to the housing.

2. The battery cell according to claim 1, wherein the body portion comprises a base corresponding to a bottom surface of the first groove, and the base has a thickness greater than that of the weakened portion.

3. The battery cell according to claim 2, wherein the pressure relief mechanism is provided with a second groove, and a part of the pressure relief mechanism corresponding to a bottom surface of the second groove forms the weakened portion.

4. The battery cell according to claim 3, wherein the second groove is recessed from a surface of the body portion facing the electrode assembly in a direction away from the electrode assembly; or the second groove is recessed from a surface of the body portion away from the electrode assembly in a direction facing the electrode assembly; and
the second groove has a depth greater than that of the first groove.

5. The battery cell according to claim 3 or 4, wherein the first groove and the second groove are arranged on the same side of the pressure relief structure, and the first groove has an end extending to an edge of the body portion and is in communication with the second groove.

6. The battery cell according to any one of claims 1 to 5, wherein the end of the first groove extends to an edge of the body portion configured to connect to the weakened portion.

7. The battery cell according to any one of claims 1 to 6, wherein the first groove is provided on a surface of the body portion facing the electrode assembly; and/or
the first groove is provided on a surface of the body portion away from the electrode assembly.

8. The battery cell according to any one of claims 1 to 7, wherein the connecting portion has a thickness greater than that of the body portion.

9. The battery cell according to claim 8, wherein the pressure relief mechanism comprises a first surface and a second surface that are oppositely arranged, the first surface is located on a side of the pressure relief mechanism away from the electrode assembly, and the second surface is located on a side of the pressure relief mechanism facing the electrode assembly;
the pressure relief mechanism is provided with a recess recessed from the first surface in a direction facing the electrode assembly, and a part between a bottom surface of the recess and the second surface comprises the body portion and the weakened portion; and
the connecting portion is located between the first surface and the second surface and surrounds an outer side of the recess.

10. The battery cell according to any one of claims 1 to 9, wherein
the first groove comprises a first groove section and a second groove section that are in communication with each other; and at a junction of the first groove section and the second groove section, a groove wall surface of the first groove section close to the second groove section is in transition with a groove wall surface of the second groove section by means of an arc surface.

11. The battery cell according to claim 10, wherein
the first groove section and the second groove section are both arc-shaped, and a middle portion of the first groove section is in communication with a middle portion of the second groove section.

12. The battery cell according to claim 10, wherein two first groove sections are provided, and the two first groove sections are respectively in communication with two ends of the second groove section.

13. The battery cell according to any one of claims 1 to 12, wherein the housing comprises a shell and an end cap, the shell is provided with an opening, and the end cap is configured to cover the opening of the shell; and
the pressure relief mechanism is mounted on the end cap.

14. A battery, comprising a plurality of battery cells according to any one of claims 1-13.

15. A power consuming device, comprising a battery cell according to any one of claims 1-13, wherein the battery cell is configured to provide electric energy.
